Europäisches Patentamt

European Patent Office

Office européen des brevets

(19)

(11) Veröffentlichungsnummer : **0 085 326**
**B1**

(12) **EUROPÄISCHE PATENTSCHRIFT**

(45) Veröffentlichungstag der Patentschrift :
30.10.85

(21) Anmeldenummer : 83100322.3

(22) Anmeldetag : 15.01.83

(51) Int. Cl.⁴ : **B 65 G 53/30**

(54) Vorrichtung zum Aufwärtsfördern von Feststoffpartikeln mittels eines Gas/Flüssigkeits-Gemisches.

(30) Priorität : 03.02.82 DE 3203578

(43) Veröffentlichungstag der Anmeldung :
10.08.83 Patentblatt 83/32

(45) Bekanntmachung des Hinweises auf die Patenterteilung : 30.10.85 Patentblatt 85/44

(84) Benannte Vertragsstaaten :
CH DE FR GB IT LI SE

(56) Entgegenhaltungen :
DE-A- 1 506 896
DE-A- 2 509 618
DE-B- 2 625 513
DE-C-   348 892
US-A- 3 371 965
US-A- 3 612 615

(73) Patentinhaber : Bergwerksverband GmbH
Franz-Fischer-Weg 61
D-4300 Essen 13 (DE)

(72) Erfinder : Schulz, Peter
Friedrichswall 19
D-4300 Essen 14 (DE)
Erfinder : Vaupel, Knut
Bedingrader Strasse 221
D-4300 Essen 11 (DE)

Jouve, 18, rue St-Denis, 75001 Paris, France

**Beschreibung**

Die Erfindung betrifft eine Vorrichtung gemäß dem Oberbegriff von Patentanspruch 1.

Solche Vorrichtungen werden im allgemeinen als Mammut-Pumpen bezeichnet, sie dienen zum Heben von Flüssigkeiten, Suspensionen und dergleichen unter Ausnutzung einer Auftriebskraft in der Fördersteigleitung, wobei die zu fördernden Feststoffpartikel am höchsten Niveau der Flüssigkeitssäule — nämlich beim Niveau ihrer Flüssigkeitsoberfläche — der Förderrichtung (Mammut-Pumpe) aufgegeben werden müssen. Die Auftriebskraft wird dadurch erzeugt, daß in das untere Ende der Fördersteigleitung unter Druck ein Gas in möglichst kleinen Blasen eingeleitet wird ; hierdurch vermindert sich die Stoffdichte in der mit der Flüssigkeitssäule kommunizierenden Fördersteigleitung. Solche Mammut-Pumpen können z. B. zum vertikalen Fördern von in der Flüssigkeit suspendierten Feststoffpartikeln dienen. Ein typisches Beispiel hierfür ist die Förderung von feinteiligen Adsorptionsmitteln, wie z. B. Aktivkohle, welche in einem Adsorptionsprozeß aus einer Flüssigkeit, wie z. B. Wasser, unerwünschte Begleitstoffe entfernen. Soche Adsorptionsmittel müssen in gewissen Abständen regeneriert werden, wozu sie in aller Regel aus dem Adsorptionsreaktor ausgeschleust und, nach erfolgter Regeneration, in diesen wieder eingeleitet werden. Der bekannte Vorzug einer Mammut-Pumpe zur Förderung solcher Partikel besteht in dem außerordentlich geringen Abrieb, den solche Partikel, im Vergleich zu anderen Fördersystemen, erfahren.

Ein Problem stellt bei den immer größer werdenden Industrieanlagen, wie z. B. auch Abwasser-Reinigungsanlagen, die zu überwindende Förderhöhe dar. Mit den bisher bekannten Mammut-Pumpen ist nämlich die Förderhöhe dadurch begrenzt, daß größere Förderhöhen geringere Dichten in der Fördersteigleitung benötigen (Dichte des Gemisches Flüssigkeit/Feststoffpartikel/Fördergas). Diese Dichte kann verständlicherweise aber nicht beliebig verringert werden, wenn definierte, schonende Förderverhältnisse einzuhalten sind. Deshalb ist die auf die Oberfläche der Flüssigkeitssäule bezogene Förderhöhe (hydrostatische Überhöhung) etwa auf die hydrostatische Höhe der Flüssigkeitssäule beschränkt, d. h. daß die Höhe der Fördersteigleitung maximal zweimal so groß wie die hydrostatische Höhe der Flüssigkeitssäule sein kann.

Aus der deutschen Zeitschrift « Fördern und Heben », 1963, Seiten 690/691, ist es bekannt, Kohle nach der Art von Mammut-Pumpen zu fördern und hierbei die in die Flüssigkeitssäule eintretende Trübe durch einen Mischer zu leiten, in den von einem Verdichter Druckluft eingeblasen wird, ohne daß in dem Rohrleitungssystem Absperrvorrichtungen vorhanden sind. Das Gemisch aus Luft, Wasser und Fördergut wird in einer Fördersteigleitung zutage gefördert. Dieses Fördersystem erfordert große Druckluftmengen, wenn eine praktikable Förderhöhe erreicht werden soll. Hierdurch wird jedoch ein hoher Abrieb am Fördergut hervorgerufen ; dieser Abrieb vergrößert sich noch durch das Einblasen der Druckluft in den Mischer. Dieses System ist daher für eine schonende Partikelförderung bei vergleichsweise großen Förderhöhen ungeeignet.

Im Gegensatz zu den Mammut-Pumpen wird bei rein hydraulischer Vertikalförderung von in einer Flüssigkeit suspendierten Feststoffpartikeln eine Feststoffschleuse am Fuße einer druckbetriebenen Förderfluidleitung vorgesehen (DE-PS 12 39 236, DE-OS 25 26 513 sowie US-PS 3 612 615). Diesen Fördersystemen haftet der Nachteil an, daß die zu fördernden Partikel beim Eintreten in das Fördersteigrohr aufgrund der notwendigerweise sehr starken Strömung der Förderflüssigkeit abrupt beschleunigt werden und daher einem für gewisse Partikel unzuträglich hohem Abrieb unterliegen.

Es ist demnach die Aufgabe der Erfindung, eine Vorrichtung der eingangs genannten Art zu schaffen, die es ermöglicht, in einer Flüssigkeit suspendierte Partikel spürbar höher fördern zu können, ohne dabei das günstige Abriebverhalten der Mammut-Pumpen zu verschlechtern ; es sollen Verstopfungen im Bereich der Feststoffaufgabe vermieden und dennoch eine Förderung mit möglichst wenig Förderflüssigkeit erreicht werden.

Die Aufgabe wird bei einer Vorrichtung der eingangs genannten Art durch die kennzeichnenden Merkmale von Patentanspruch 1 gelöst. Eine vorteilhafte Weiterbildung der Erfindung ergibt sich aus Patentanspruch 2.

Durch die Erfindung wird erreicht, daß mittels einer Mammut-Pumpe Feststoffpartikel äußerst schonend in praktisch beliebige Höhen gefördert werden können, und zwar, unabhängig von dem Höhenniveau der Feststoffaufgabestelle, in das System der kommunizierenden Röhren.

Hierbei wird bevorzugt die Feststoffschleuse oberhalb, und zwar senkrecht über dem geschlossenen Behälter (Feststoffaufgabezone) angeordnet ; auf diese Weise können die Feststoffpartikel reibungsarm in den Bodenbereich des geschlossenen Behälters sinken (unteres Ende der Ansaugleitung), um von dort mit relativ wenig Förderwasser und unter Vermeidung von Leitungsverstopfungen abgefördert zu werden.

Bei der erfindungsgemäßen Mammut-Pumpe können alle Gase, Flüssigkeiten und Feststoffe eingesetzt werden, wie sie nach dem Stande der Technik bekannt oder denkbar sind. Das Gas muß einen gewissen, vom Strömungswiderstand abhängigen Überdruck, bezogen auf den hydrostatischen Druck der Fördersteigleitung, aufweisen. Bevorzugt verwendet man dieselbe Flüssigkeit, in welcher der Feststoff ggf. suspendiert ist. Die Korngröße der Feststoffpartikel richtet sich in bekannter Weise nach den Auslegungsdaten für Mammut-Pumpen. Die förderseitigen Betriebsbedingungen der erfindungsgemäßen Mammut-Pumpe entsprechen den nach dem Stande der Technik bekannten.

0 085 326

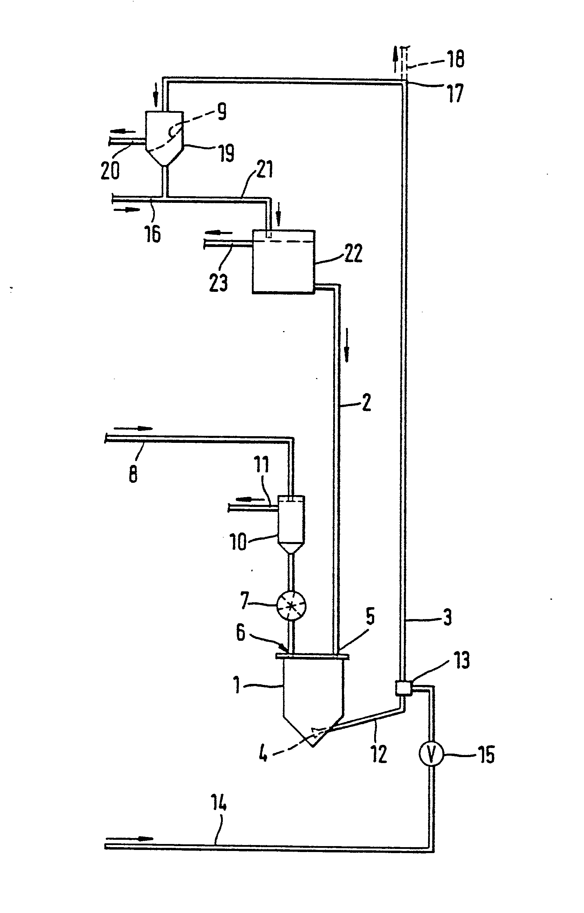

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung.

In der Figur ist mit 1 ein geschlossener allzeit dichter, Behälter (Feststoff-Aufgabezone) bezeichnet, der sich am Fuße eines Systemes kommunizierender Röhren, bestehend aus einer Flüssigkeitssäule 2 und einer Fördersteigleitung 3 mit Ansaugleitung 12 befindet. In den geschlossenen Behälter 1 mündet das untere Ende 4 der Ansaugleitung 12, das untere Ende 5 der Flüssigkeitssäule 2 sowie die Auslaßseite 6 einer Feststoffschleuse 7 (Materialschleuse) ein.

Die Materialschleuse 7 kann z. B. aus einer beidseitig verschließbaren Schleusenkammer bestehen, in deren Einlaßseite 8 eine geringerer Druck herrscht, als in ihrer Auslaßseite 6. Geeignet für eine solche Materialschleuse 7 ist unter anderem die in der Zeichnung dargestellte Zellradschleuse, welcher ein Vorlagebehälter 10 einlaßseitig vorgeschaltet ist. Das zu fördernde Material kann z. B. über die Materialeinlaßseite 8 in den Vorlagebehälter 10 gelangen, in welchem das Material absinken kann, während die Suspensionsflüssigkeit, mit der es an der Materialeinlaßseite ansteht, durch einen Überlauf 11 am Vorlagebehälter 10 abfließen kann. Mittels der Zellradschleuse gelangt das Material, z. B. gemeinsam mit einem geringfügigen Anteil an Suspension- oder Förderflüssigkeit, in den geschlossenen Behälter 1, welcher bevorzugt völlig mit der in der Flüssigkeitssäule 2 anstehenden Flüssigkeit sowie dem zu fördernden Material gefüllt ist. Zu fördernde Feststoffpartikel sinken im dem geschlossenen Behälter 1 ab und gelangen in aufgelockerter Form in das untere Ende 4 der Ansaugleitung 12 ; durch diese gelangt das zu fördernde Material, zusammen mit Förderflüssigkeit, aus dem geschlossenen Behälter 1 zu einem Gaseinlaßbereich 13, in welchen über Leitung 14 und Ventil 15 das Fördergas gelangt. Der Gaseinlaßbereich stellt zugleich den tiefsten Punkt der effektiven Förderstrecke dar. Von ihm aus gelangt das Gemisch aus zu förderndem Material, der Förderflüssigkeit und dem Fördergas durch die Fördersteigleitung 3 zum höchsten Förderniveau 17. Dort empfiehlt sich, das Fördergas über die gestrichelt dargestellte Leitung 18 entweichen zu lassen.

Die Abtrennung der Förderflüssigkeit kann, je nach Anwendungsfall, unterschiedlich erfolgen, z. B. durch Absiebung oder durch Sedimentation des geförderten Feststoffes (Flüssigkeitsabscheider 19 mit z. B. einem Bogensieb 9).

Sofern die erwünschte Förderhöhe dies zuläßt, kann dem Flüssigkeitsabscheider 19 direkt oder über eine Leitung 21 ein Flüssigkeitsspeicherbehälter 22 nachgeordnet sein, der mit der Fördersteigleitung 3 über die Flussigkeitssäule 2 kommuniziert. Überschüssige Flüssigkeitsmengen können aus dem Flüssigkeitsspeicherbehälter 22 über eine niveaugeregelte Überlaufleitung 23 abgeführt (und unterschüssige Mengen über Ausgleichsleitung 16 zugeführt) werden. Der Flüssigkeitsspeicherbehälter 22 kann allerdings auch bereits in den Flüssigkeitsabscheider 19 im vorgenannten Sinne integriert sein.

Das sich aus der Überlaufleitung 23 ergebende Höhenniveau bestimmt den am unteren Ende 4 der Ansaugleitung 12 anstehenden hydrostatischen Druck und somit die je nach zu förderndem Material erreichbare maximale Förderhöhe. Die Höhe der Flüssigkeitssäule 2, die am unteren Ende 4 der Ansaugleitung 12 ansteht, ist demnach erheblich — im Prinzip sogar unbegrenzt — höher, als der höchste Punkt, mit dem das zu fördernde Material oberhalb dem unteren Ende 4 der Ansaugleitung 12 bzw. der Fördersteigleitung 3 ansteht.

Die Erfindung wurde realisiert an einer Vorrichtung gemäß der vorbeschriebenen Zeichnung, wobei lediglich statt einer Zellradschleuse eine vertikalse Schleuse mit beidseitigen Absperrhähnen an einem Schleusenschacht verwendet wurde.

| | |
|---|---|
| Volumen Vorlagebehälter (10) | 15 l |
| Nennweite der als Absperrhähne dienenden Kugelhähne | 40 mm |
| Volumen des Schleusenschachtes | 10 l |
| Volumen Behälter 1 | 20 l |
| Volumen Flüssigkeitspeicherbehälter (22) | 20 l |
| ⌀ Flüssigkeitssäule (2) | 32 mm |
| ⌀ Fördersteigleitung (3) | 15 mm |
| Niveaudifferenzen : | |
| — Gaseinlaß (13)/Überlauf (23) | 7 200 mm |
| — Überlauf (23)/max. Förderniveau (17) | 2 800 mm |

Gefördert wurden Aktivkohlepartikel von einem mittleren Durchmesser von 1,6 mm und einem Schüttgewicht von ca. 400 g/l. Die Förderflüssigkeit war Wasser, das Fördergas Luft. Dem Vorlagebehälter 10 wurde ein Suspensionsstrom von 110 l/h mit einem Feststoffanteil von 60 l/h aufgegeben. Sobald sich in diesem Behälter eine ausreichende Feststoffmenge abgesetzt hatte, wurde der obere Kugelhahn am Schleusenschacht geöffnet, durch den die Aktivkohle aus dem Vorlagebehälter 10 in den Schleusenschacht sank ; danach wurde der obere Kugelhahn wieder geschlossen und anschließend der untere Kugelhahn geöffnet, bis sämtliche Aktivkohle aus dem Schleusenschacht in dem geschlossenen Behälter 1 abgesunken war (dieser Vorgang wurde pro Stunde 10 mal wiederholt). Der Feststoff (60 l/h) gelangte mit ca. 90 l/h Wasser aus der Flüssigkeitssäule 2 aus dem Flüssigkeitsspeicherbehälter 22 in das untere Ende 4 der Ansaugleitung 12 und zum Gaseinlaßbereich 13, wo ca. 1,5 m³ Luft/h (1 bar, 20 °C) in die

3

Fördersteigleitung 3 als fein verteilte Bläschen aufgegeben wurden. Dabei stellte sich heraus, daß dieser Transport der Aktivkohlepartikel genauso schonend war, wie nach dem Stande der Technik bekannt.

Der höchste Punkt, mit dem die zu fördernde Suspension in der erfindungsgemäßen Vorrichtung anstand, lag 10 m über dem Gaseinlaßbereich 13. Nach dem Stande der Technik müßte die Aufgabestelle des zu fördernden Materials — bei gleicher Förderleistung — auf dem Niveau der Überlaufleitung 23-7 200 mm über 13 — liegen. Dieses Niveau konnte durch die erfindungsgemäße Vorrichtung um das 4,5 fache verringert werden.

**Patentansprüche**

1. Vorrichtung zum Aufwärtsfördern von Feststoffpartikeln mittels eines Gas/Flüssigkeits-Gemisches, bei der am Fuße eines Systemes kommunizierender Röhren, bestehend aus einer Flüssigkeitssäule (2) und einer Fördersteigleitung (3), Gas (Fördergas) eingespeist wird, dadurch gekennzeichnet, daß am Fuße der Flüssigkeitssäule (2) ein geschlossener Behälter (1) (Feststoffaufgabezone) angeordnet ist, in den

    a) das untere Ende (4) einer in die Fördersteigleitung (3) einmündenden Ansaugleitung (12),

    b) das untere Ende (5) der Flüssigkeitssäule (2) sowie

    c) die Auslaßseite (6) einer Feststoffschleuse (7) für die zu fördernden Feststoffpartikel einmündet.

2. Vorrichtung nach Anspruch 1, gekennzeichnet durch einen dem höchsten Förderniveau (17) der Fördersteigleitung (3) nachgeordneten Flüssigkeitsabscheider (19) mit einem diesem nachgeordneten und mit der Flüssigkeitssäule (2) kommunizierenden Flüssigkeitsspeicherbehälter (22).

**Claims**

1. Apparatus for the upward conveyance of solid particles by means of a gas/liquid mixture, in which gas (conveying gas) is fed in at the base of a system of communicating pipes comprising a liquid column (2) and a conveying pipe (3), characterised in that arranged at the base of the liquid column (2) is a sealed container (1) (feeding station for solid material) into which discharge

    a) the lower end (4) of an intake pipe (12) which discharges into the conveying pipe (3),

    b) the lower end (5) of the liquid column (2), and

    c) the outlet side (6) of a solid material charging valve (7) for the solid particles to be conveyed.

2. Apparatus according to claim 1, characterised by a siphon (19) which is disposed downstream of the highest conveying level (17) of the conveying pipe (3), with a liquid storage container (22) which is disposed downstream of the siphon and which communicates with the liquid column (2).

**Revendications**

1. Installation pour le transport ascendant de matières solides en particules à l'aide d'un mélange de gaz et de liquide, dans laquelle un gaz (gaz transporteur) est introduit dans la partie inférieure d'un système de tuyaux communicants, constitué d'une colonne à liquide (2) et d'une conduite de transport ascendante (3), caractérisée en ce que la zone d'alimentation de la matière solide est constituée d'un réservoir fermé (1), disposé au pied de la colonne à liquide (2) et dans lequel débouchent

    a) l'extrémité inférieure (4) d'un conduit d'aspiration (12) venant de la conduite de transport ascendante (3),

    b) l'extrémité inférieure (5) de la colonne à liquide (2) et

    c) le côté sortie (6) d'un sas (7) pour les particules de matière solide à transporter.

2. Installation suivant la revendication 1, caractérisée en ce qu'elle comprend un séparateur de liquide (19) disposé en aval du niveau supérieur (17) de la conduite de transport ascendante (3), auquel fait suite un réservoir à liquide (22), communiquant avec la colonne à liquide (2).